# EUROPÄISCHE PATENTSCHRIFT

(11) **EP 3 465 325 B1**
(45) Veröffentlichungstag und Bekanntmachung des Hinweises auf die Patenterteilung: **24.07.2024**
(21) Anmeldenummer: 17724545.3
(22) Anmeldetag: 17.05.2017
(51) Int. Cl.: G02B 27/01

(54) **ANZEIGEVORRICHTUNG, FAHRERASSISTENZSYSTEM UND VERFAHREN FÜR EIN KRAFTFAHRZEUG, SOWIE KRAFTFAHRZEUG**
DISPLAY DEVICE, DRIVER ASSISTANCE SYSTEM, AND METHOD FOR A MOTOR VEHICLE, AND MOTOR VEHICLE
DISPOSITIF D'AFFICHAGE, SYSTÈME D'AIDE À LA CONDUITE ET PROCÉDÉ POUR UN VÉHICULE AUTOMOBILE AINSI QUE VÉHICULE AUTOMOBILE

(30) Priorität: 30.05.2016 DE 102016109872
(43) Veröffentlichungstag der Anmeldung: 10.04.2019
(73) Patentinhaber: Valeo Schalter und Sensoren GmbH, 74321 Bietigheim-Bissingen (DE)
(72) Erfinder: SCHOCH, Lars, 74321 Bietigheim-Bissingen (DE); SIMONIS, Karl, 74321 Bietigheim-Bissingen (DE)
(74) Vertreter: Pothmann, Karsten
(86) Internationale Anmeldenummer: PCT/EP2017/061824
(87) Internationale Veröffentlichungsnummer: WO 2017/207275

(56) Entgegenhaltungen:
- EP-A1- 1 912 091
- EP-A1- 2 637 156
- EP-A2- 0 186 391
- WO-A1-2015/180817
- DE-A1- 102012 018 397
- JP-U- S57 121 777

## Beschreibung

Die vorliegende Erfindung betrifft eine Anzeigevorrichtung für ein Kraftfahrzeug mit einem Gehäuse, welches eine in dem Gehäuse angeordnete Projektionseinrichtung zum Erzeugen eines virtuellen Bildes auf eine außerhalb des Gehäuses liegende und von einem Beobachter betrachtbare Projektionsfläche aufweist, die zumindest einen um eine Drehachse schwenkbar gelagerten Spiegel aufweist, der in einer Umlenkposition zum Umlenken eines von einer Lichtquelle der Projektionseinrichtung ausgegebenen Lichtes ausgebildet ist, und mit einer Justiervorrichtung zum Justieren der Umlenkposition des Spiegels durch Schwenken um die Drehachse. Darüber hinaus betrifft die vorliegende Erfindung ein Fahrerassistenzsystem mit einer solchen Anzeigevorrichtung. Ferner betrifft die vorliegende Erfindung ein Kraftfahrzeug mit einem solchen Fahrerassistenzsystem mit einer solchen Anzeigevorrichtung. Schließlich betrifft die folgende Erfindung ein Verfahren zum Justieren eines Spiegels einer Anzeigevorrichtung eines Kraftfahrzeugs.

Aus dem Stand der Technik sind bereits Anzeigevorrichtungen für Kraftfahrzeuge bekannt, mit denen dem Fahrer bzw. den Insassen des Kraftfahrzeuges eine Anzeige bereitgestellt werden kann. Das Interesse richtet sich vorliegend insbesondere auf Kopf-oben-Anzeigevorrichtungen, welche auch als Head-Up-Anzeigevorrichtungen oder auch als Head-Up-Displays (HUD) bezeichnet werden. Eine derartige Anzeigevorrichtung umfasst üblicherweise ein Gehäuse, in welchem eine Projektionseinrichtung angeordnet ist. Ferner umfasst die Anzeigevorrichtung eine Optikeinrichtung, die beispielsweise eine oder mehrere Spiegel umfassen kann. Mit der Optikeinrichtung kann das von der Projektionseinrichtung abgestrahlte Licht auf eine Projektionsfläche projiziert werden. Die Projektionsfläche ist derart angeordnet, dass sie von einem Beobachter, insbesondere einem Fahrer des Kraftfahrzeuges, betrachtbar ist. Die Projektionsfläche kann eine semitransparente Spiegelfläche aufweisen. Diese semitransparente Spielfläche kann beispielsweise durch einen Bereich der Windschutzscheibe des Kraftfahrzeugs bereitgestellt werden. Die Optikeinrichtung kann einen zumindest einen um eine Drehachse schwenkbar gelagerten Spiegel aufweisen. Der drehbar gelagerte Spiegel dient insbesondere zum Umlenken eines von der Projektionseinrichtung ausgegebenen Lichtes. Die auf das Anzeigeelement, insbesondere der Windschutzscheibe, projizierte Information, welche von diesem reflektiert wird, wird mit einer durch das Anzeigeelement hindurchscheinenden Information aus einer hinter dem Anzeigeelement gelegenen Umgebung überlagert, wodurch ein virtuelles Bild bzw. eine virtuelle Anzeige bereitgestellt werden kann. Um dem Fahrer je nach Sitzposition, bzw. je nach Größe des Fahrers, eine optimale Sicht auf das virtuelle Bild zu ermöglichen, kann eine Augenbox, die auch "Eyebox" genannt wird, im Fahrzeug nachgeführt werden. Die Eyebox ist derjenige Bereich oder Sichtbereich, in dem der Augpunkt des Benutzers liegt, d.h. derjenige Bereich, in dem der Benutzer die angezeigte Information sehen kann. Das Umlenken des ausgegebenen Lichtes durch die Projektionseinrichtung dient zum Nachführen der Eyebox und wird mittels einer Justiervorrichtung am Spiegel realisiert. Stand der Technik ist z.B. in WO 2015/180817 A1 zu finden.

Die Position der Anzeigevorrichtung ist üblicherweise vor dem Beobachter, insbesondere vor dem Fahrer des Kraftfahrzeuges, in einer Fahrgastzelle des Kraftfahrzeuges angeordnet. Es kann ein Bauraum im Bereich des Armaturenbretts, insbesondere im Bereich einer Kombihutze, bereitgestellt werden, in dem die Anzeigevorrichtung montiert werden kann und mittels einer Abdeckung, die vorzugsweise transparent ist, vor Schmutzpartikeln geschützt werden.

Ein Verstellbereich der Eyebox ist üblicherweise sehr gering, da eine große Änderung des Nach-unten-Schau-Winkels, auch "Look-Down-Winkel" genannt, auch eine große Verschiebung des virtuellen Bildes nach sich zieht. Der Look-Down-Winkel ist der Winkel zwischen Horizont zu einem markierten Bild beziehungsweise der Winkel der Straßenoberfläche, der aus einer Augposition des Beobachters resultiert. Bei einer Veränderung des Look-Down-Winkels wird also eine Lage des virtuellen Bildes geändert, sodass eine dargestellte Information bei der virtuellen Anzeige verändert wird, so dass beispielsweise bei der Darstellung eines Navigationspfeiles dieser aus Sicht des Beobachters nicht mehr auf der Straße liegt. Des Weiteren darf das virtuelle Bild nicht zu weit in einen mittleren Sichtbereich des Fahrers gelangen, da sonst das virtuelle Bild eventuelle Hindernisse in der Umgebung des Fahrzeuges überblenden könnte. Ein zu weit unten im Sichtfeld des Beobachters gelegenes Bild könnte eine Überschneidung mit einer Spiegelung eines Kraftfahrzeugbauteils, beispielsweise einer Spiegelung des Armaturenbrettes, ergeben. Üblicherweise reicht daher eine Änderung von +/-2°aus, um die Lage des virtuellen Bildes an die Eyebox des Fahrers anzupassen. Der Verstellbereich muss ebenfalls möglichst "fließend" durchfahren werden, sodass ein Betrachter das Verstellen, insbesondere Justieren, nicht wahrnimmt. Des Weiteren wird dadurch eine hohe Variabilität verschiedener Lagen des virtuellen Bildes realisiert. Aus dem Stand der Technik sind hierzu Stellmotoren mit einem stark untersetzten Getriebe bekannt, mittels welcher das Justieren, insbesondere das Schwenken des Umlenkspiegels durchgeführt wird. Diese Stellmotoren mit dem stark untersetzten Getriebe sind oftmals sehr teuer und generieren Geräusche, welche von einem Beobachter als störend empfunden werden können.

Bei diesen Kopf-oben-Anzeigevorrichtungen gibt es Ausführungen, bei welchen das virtuelle Bild an die Innenseite der Windschutzscheibe projiziert wird, so dass es vom Beobachter, insbesondere dem Fahrer, an der Innenseite betrachtet werden kann. Des Weiteren sind dazu unterschiedliche Ausführungen von Kopf-oben-Anzeigevorrichtungen bekannt, bei welchen das virtuelle Bild nicht auf die Windschutzscheibe projiziert wird, sondern mit einem zusätzlichen Spiegel, dem oben genannten Kombinierspiegel, der Kopf-oben-Anzeigevorrichtung zum Beobachter hin projiziert wird und somit bei insbesondere richtiger Einstellung des Kombinierspiegels in dessen Gesicht projiziert wird.

Es ist Aufgabe der vorliegenden Erfindung, eine Lösung aufzeigen, wie das Schwenken des Spiegels um die Drehachse auf möglichst einfache und dennoch zuverlässige Weise erfolgen kann.

Diese Aufgabe wird erfindungsgemäß durch eine Anzeigevorrichtung, durch ein Fahrerassistenzsystem, durch ein Kraftfahrzeug, sowie ein Verfahren mit den Merkmalen gemäß den jeweiligen unabhängigen Ansprüchen gelöst.

Eine erfindungsgemäße Anzeigevorrichtung für ein Kraftfahrzeug umfasst ein Gehäuse. Ferner ist in dem Gehäuse eine Projektionseinrichtung zum Erzeugen eines virtuellen Bildes angeordnet. Ferner wird das virtuelle Bild auf eine außerhalb des Gehäuses liegende und von einem Beobachter betrachtbare Projektionsfläche projiziert. Es ist vorgesehen, dass die Projektionseinrichtung einen um eine Drehachse schwenkbar gelagerten Spiegel aufweist. Ferner ist der Spiegel in einer Umlenkposition zum Umlenken eines von der Lichtquelle der Projektionseinrichtung ausgegebenen Lichtes ausgebildet. Weiterhin umfasst die Anzeigevorrichtung eine Justiervorrichtung zum Justieren der Umlenkposition des Spiegels durch Schwenken um die Drehachse.

Die Justiervorrichtung umfasst zumindest einen ersten Formgedächtnisdraht der mit dem Spiegel gekoppelt ist, sodass der Spiegel durch eine Längenveränderung des Formgedächtnisdrahtes um die Drehachse schwenkbar ist. Der Formgedächtnisdraht kann beispielsweise aus einer Formgedächtnislegierung, wie zum Beispiel Nickel-Titan, Nickel-Titankupfer, Kupfer-Zink oder weitere Formgedächtnislegierungen ausgebildet sein. Bevorzugt verformt sich das Formgedächtnismaterial in Abhängigkeit von der Eigentemperatur innerhalb eines bestimmten Temperaturintervalls, d.h. bei Temperaturänderungen unterhalb einer bestimmten unteren Temperatur findet keine phasenübergangsbedingte Verformung statt und ab Temperaturen oberhalb einer bestimmten oberen Temperatur findet ebenfalls keine phasenübergangsbedingte Formänderung mehr statt. Formgedächtnislegierungen sind bestimmte Metalle oder Metalllegierungen, die in zwei unterschiedlichen Kristallstrukturen existieren können. Während die meisten Metalle dieselbe Kristallstruktur bis zu ihrem Schmelzpunkt besitzen, haben Formgedächtnislegierungen, abhängig von der Temperatur, zwei unterschiedliche Strukturen (Phasen). Die Formwandlung bzw. Formänderung basiert damit auf dem Phasenübergang, d.h. der temperaturabhängigen Gitterumwandlung, zu einer dieser beiden Kristallstrukturen. Eine solche phasenübergangsbedingte Formänderung, wie zum Beispiel eine Ausdehnung, überschreitet dabei die herkömmliche, nicht phasenübergangsbedingte Wärmeausdehnung von Materialien um Größenordnungen, d.h. um einen Faktor mehrerer Zehnerpotenzen. Eine solche Temperaturänderung kann insbesondere mittels einer Bestromung des Formgedächtnisdrahtes realisiert werden. Durch den elektrischen Widerstand des Drahtes wird elektrische Energie in Wärmeenergie transformiert, was wiederum die gewünschte Längenänderung nach sich ziehen kann. Erfindungsgemäß ist vorgesehen, dass besonders Formgedächtnislegierungen, die eine Längenveränderung als Formänderung aufweisen, in der Justiervorrichtung angeordnet werden. Ein solcher Formgedächtnisdraht lässt sich auf einfache Weise bereitstellen und führt bei minimaler Geräuschentwicklung zu einem Schwenken des Spiegels.

Durch die erfindungsgemäße Anzeigevorrichtung wird eine erweiterte Realität mit gleichbleibender Höhenlage des virtuellen Bildes beim Anpassen eines Sichtfeldes an benutzerspezifische Bedürfnisse ermöglicht. Somit wird die Darstellung der erweiterten Realität vor allem für beispielsweise sehr große oder sehr kleine Benutzer verbessert.

Um die Augposition zu ermitteln kann die Anzeigevorrichtung eine Sensoreinrichtung zum Erfassen der Augposition aufweisen, sowie eine Steuereinrichtung, die dazu eingerichtet ist, in Abhängigkeit von einem Signal der Sensoreinrichtung die Justiervorrichtung, insbesondere den ersten Formgedächtnisdraht, zu steuern und somit ein Schwenken des Spiegels durchzuführen. Mit anderen Worten kann die Steuereinrichtung dazu eingerichtet sein, in Abhängigkeit von dem Signal der Sensoreinrichtung eine Drehlage des Spiegels zu verändern. Die Sensoreinrichtung kann dabei ein Bauteil oder eine Gerätekomponente der Anzeigevorrichtung sein, die einen entsprechenden Sensor aufweisen kann. Ein solcher Sensor kann beispielsweise als Kamera ausgebildet sein.

In einer vorteilhaften Ausgestaltungsform kann die Justiervorrichtung ein separates Koppelelement aufweisen, welches mit dem ersten Formgedächtnisdraht und dem Spiegel gekoppelt ist, sodass mittels der Längenveränderung des ersten Formgedächtnisdrahtes eine Bewegung, insbesondere eine lineare Bewegung, des Koppelelementes bewirkbar ist und dadurch ein Verschwenken des Spiegels um die Drehachse zur Verstellung der Umlenkposition auftreten kann. Hierbei es vorteilhaft, dass nicht der Formgedächtnisdraht direkt mit dem Spiegel gekoppelt ist, und somit ein einfacherer Verbau des ersten Formgedächtnisdrahtes realisiert werden kann. Des Weiteren kann bei einem nötigen Austausch einer der Bauteile, das Bauteil einzeln ausgetauscht werden, was zu einer Kostenreduzierung und zu einer Materialeinsparung führt.

In einer weiteren vorteilhaften Ausgestaltungsform kann das Koppelelement in Richtung seiner Längsachse betrachtet in sich selbst längenveränderlich ausgebildet sein. Mittels dieser Anordnung ist es möglich, nicht gewollte Rüttelbewegungen, welche über das Koppelelement übertragen werden können, zu dämpfen, sodass die Rüttelbewegungen gedämpft an den Spiegel übertragen werden können. Des Weiteren kann dadurch eine noch feinere Justierung realisiert werden, da zwei voneinander unabhängige und längenveränderliche Komponenten am Justiervorgang beteiligt werden können.

Es hat sich als vorteilhaft erwiesen, dass das Koppelelement als ein Federelement ausgebildet ist. Das Federelement ist in sich längenveränderlich. Durch spezielle Materialien und "Drahtdicken" der Feder an sich, kann eine sehr exakte und bedarfsgenaue Federkraft bereitgestellt werden. Diese Federkraft kann dann dämpfend und haltend am Koppelelement angeordnet sein. Durch das Federelement kann auf einfache und günstige Weise eine Dämpfung der Rüttelbewegungen sowie eine Dämpfung einer Kraftübertragung vom ersten Formgedächtnisdraht auf den Spiegel durchgeführt werden. Des Weiteren kann das Federelement eine Rückholkraft auf den Spiegel bewirken, so dass dieser mittels des Federelementes in einer Position gehalten werden kann.

Es hat sich ebenfalls als vorteilhaft erwiesen, wenn das Koppelelement als ein zweiter Formgedächtnisdraht ausgebildet ist. Mittels des zweiten Formgedächtnisdrahtes kann eine noch genauere Justage des Spiegels durchgeführt werden, da der erste Formgedächtnisdraht und der zweite Formgedächtnisdraht unterschiedlich angesteuert werden können, sodass beispielsweise die Vorteile unterschiedlicher Formgedächtnislegierungen kombiniert ausgenutzt werden können. Des Weiteren kann der zweite Formgedächtnisdraht eine Rückholkraft auf den Spiegel bewirken, so dass dieser mittels des zweiten Formgedächtnisdrahtes in einer Position gehalten werden kann.

Gemäß einer bevorzugten Ausführungsform kann das Koppelelement mit dem ersten Formgedächtnisdraht durch ein separates Verbindungselement verbunden werden. Das Verbindungselement kann, beispielsweise durch eine längliche Form, insbesondere eine zylindrische Form, gewährleisten, dass eine Verbindung zwischen dem Koppelelement und dem ersten Formgedächtnisdraht realisiert werden kann. Des Weiteren kann bei einem nötigen Austausch, beispielsweise wegen Verschleißes eines der Komponenten, dieser sehr einfach realisiert werden, da die beweglichen Komponenten, insbesondere das Koppelelement und der erste Formgedächtnisdraht, voneinander entkoppelt sind und dadurch einfacher austauschbar sind.

In einer weiteren vorteilhaften Ausgestaltungsform kann das Koppelelement außerhalb einer Reflexionsfläche des Spiegels mit dem Spiegel gekoppelt sein. Die Reflexionsfläche des Spiegels kann dadurch im Ganzen ausgenutzt werden, wodurch ein vorteilhafteres virtuelles Bild an die Windschutzscheibe projiziert werden kann. Die Anzeigevorrichtung kann dadurch auch materialsparender und kostengünstiger produziert werden, da gerade der Spiegel aufwendig in der Produktion ist. Daher ist vorteilhaft die gesamte zur Verfügung stehende Spiegelfläche als Reflexionsfläche nutzbar.

In einer weiteren Ausgestaltung ist eine Koppelstelle zwischen dem Koppelelement und dem Spiegel nicht auf der Drehachse liegend ausgebildet. Insbesondere kann die Drehachse beabstandet zu einem ersten Rand und beabstandet zu einem zweiten gegenüberliegenden Rand des Spiegels verlaufend ausgebildet sein. Die Drehachse kann sich weiterhin zwischen die beiden Ränder verbindende, weiteren Ränder erstrecken, wobei die Koppelstelle zwischen dem Spiegel und dem Koppelelement in eine Verbindungslinie zwischen den Rändern zwischen Drehachse und einem Rand angeordnet ist, insbesondere an einem Rand ausgebildet ist. Durch diese Anordnung kann ein Hebelarm erzeugt werden, wodurch der Spiegel mit einem geringen Kraftaufwand bei gleichzeitig hoher Genauigkeit justiert werden kann.

In einer weiteren vorteilhaften Ausgestaltungsform kann die Justiervorrichtung Halteelemente aufweisen, an denen der Formgedächtnisdraht befestigt ist, wobei die Halteelemente an einer Platine angeordnet sind. Die Halteelemente können dabei als elektrische Kontakte für die Bestromung des ersten Formgedächtnisdrahtes dienen. Durch die Anbringung der Halteelemente an die Platine kann bauraumsparend die Justiervorrichtung realisiert werden. Des Weiteren können benötigte Schaltelemente, die zur Steuerung der Justiervorrichtung dienen können, auf der bereits vorhandenen Platine angeordnet werden. Durch die Halteelemente kann der erste Formgedächtnisdraht in einer mechanisch vorgespannten Position gehalten werden, so dass der erste Formgedächtnisdraht durch die Schwerkraft nur minimal in seiner Position beeinträchtigt wird. Dadurch kann die Ansteuerung bzw. die Längenänderung des ersten Formgedächtnisdrahtes direkt in die gewünschte Richtung, nämlich in Längsrichtung des Koppelelementes realisiert werden. Somit kann ein Schwenken um die Drehachse erfolgen, die vorzugsweise bei einer eingebauten Anzeigevorrichtung in einer Fahrzeugquerrichtung verlaufen kann. Die Halteelemente können als Stifte ausgebildet sein.

Gemäß einer weiteren vorteilhaften Ausgestaltungsform kann die Justiervorrichtung eine Arretiervorrichtung aufweisen, mit welcher der Spiegel in seiner justierten Umlenkposition arretierbar ist. Durch diese Anordnung kann der Spiegel nach einer Justage in die Umlenkposition arretiert werden und somit kann nach der Justage insbesondere der erste Formgedächtnisdraht wieder in eine Ursprungsposition, die einer Position entspricht, die der erste Formgedächtnisdraht aufweist wenn er nicht bestromt ist, zurückgeführt werden, ohne dass der Spiegel sich in seiner Position verändert. Dies kann dazu führen, dass sowohl elektrische Energie eingespart werden kann als auch ein Verschleiß des ersten Formgedächtnisdrahtes verringert wird.

Es hat sich ebenfalls als vorteilhaft erwiesen, wenn die Arretiervorrichtung eine an der Drehachse angreifende Kupplung umfasst, durch welche der Spiegel in einer eingestellten Umlenkposition arretierbar ist. Mittels dieser Anordnung ist eine bauraumsparende und bauteilsparende Arretierung des Spiegels in einer eingestellten Umlenkposition möglich.

Gemäß einer weiteren bevorzugten Ausführungsform ist die Justiervorrichtung derart ausgebildet, dass der Spiegel in seiner Umlenkposition um kleiner +/-1 ,8°um eine Grundstellung veränderbar ist. Es hat sich besonders vorteilhaft gezeigt, dass mittels einer Umlenkposition um kleiner +/-1 ,8°um eine Gru ndstellung der bevorzugte Stellbereich einer Eyebox von +/-2° realisiert werd en kann. Bei einer Veränderung der Umlenkposition wird also eine Lage des virtuellen Bildes geändert, sodass eine dargestellte Information bei einer virtuellen Anzeige verändert wird, so dass beispielsweise bei der Darstellung eines Navigationspfeiles dieser aus Sicht des Beobachters nicht mehr auf der Straße liegt. Des Weiteren darf das virtuelle Bild nicht zu weit in einen mittleren Sichtbereich des Fahrers gelangen, da sonst das virtuelle Bild eventuelle Hindernisse in der Umgebung des Fahrzeuges überblenden könnte. Ein zu weit unten im Sichtfeld des Beobachters gelegenes Bild könnte eine Überschneidung mit einer Spiegelung eines Fahrzeugbauteils, beispielsweise einer Spiegelung des Armaturenbretts, ergeben.

Ein erfindungsgemäßes Fahrerassistenzsystem für ein Kraftfahrzeug umfasst eine erfindungsgemäße Anzeigevorrichtung.

Ein erfindungsgemäßes Kraftfahrzeug umfasst ein erfindungsgemäßes Fahrerassistenzsystem. Das Kraftahrzeug ist insbesondere als Personenkraftwagen ausgebildet.

Ein erfindungsgemäß Verfahren dient zum Justieren eines Spiegels einer Anzeigevorrichtung eines Kraftfahrzeugs. Hierbei weist die Anzeigevorrichtung ein Gehäuse auf, welches eine in dem Gehäuse angeordnete Projektionseinrichtung zum Erzeugen eines virtuellen Bildes auf eine außerhalb des Gehäuses liegende und von einem Beobachter betrachtbare Projektionsfläche aufweist, und mit zumindest einem um eine Drehachse schwenkbar gelagerten Spiegel, der in einer Umlenkposition zum Umlenken eines von einer Lichtquelle der Projektionseinrichtung ausgegebenen Lichtes ausgebildet ist und mit einer Justiervorrichtung zum Justieren der Umlenkposition des Spiegels durch Schwenken um die Drehachse ausgebildet wird. Der Spiegel wird mit einem ersten Formgedächtnisdraht der Justiervorrichtung gekoppelt. Durch eine Längenänderung des ersten Formgedächtnisdrahtes wird eine Umlenkposition des Spiegels durch Schwenken des Spiegels um die Drehachse eingestellt.

Die Steuereinrichtung kann ein entsprechendes Steuersignal empfangen, das einen erwünschtes Umlenken und damit einen gewünschten Höhenversatz eines Sichtbereiches um die Augposition des Beobachters beschreibt und in Abhängigkeit von dem Steuersignal ein Schwenken des Spiegels zum Justieren um die Drehachse veranlassen. Das Steuersignal kann beispielsweise von einer Bedienvorrichtung des Kraftfahrzeuges oder von der Sensoreinrichtung erzeugt werden. Mittels der Sensoreinrichtung kann ein automatisches Anpassen der Eyebox realisiert werden.

Die mit Bezug auf die erfindungsgemäße Anzeigevorrichtung vorgestellten bevorzugten Ausführungsformen und deren Vorteile gelten entsprechend für das erfindungsgemäße Fahrerassistenzsystem, das erfindungsgemäße Kraftfahrzeug sowie das erfindungsgemäße Verfahren.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Die Erfindung wird nur anhand von bevorzugten Ausführungsbeispielen sowie unter Bezugnahme auf die beigefügten Zeichnungen erläutert.

Dabei zeigen:
- Fig. 1: eine ausschnittsweise Darstellung eines Kraftfahrzeuges, welches eine Anzeigevorrichtung gemäß einer Ausführungsform der vorliegenden Erfindung aufweist;
- Fig. 2: eine schematische und ausschnittsweise Darstellung der Anzeigevorrichtung mit einem schwenkbaren Spiegel; und
- Fig. 3: eine ausschnittsweise und schematische Draufsicht auf die Anzeigevorrichtung.

In den Figuren werden gleiche und funktionsgleiche Elemente mit den gleichen Bezugszeichen versehen.

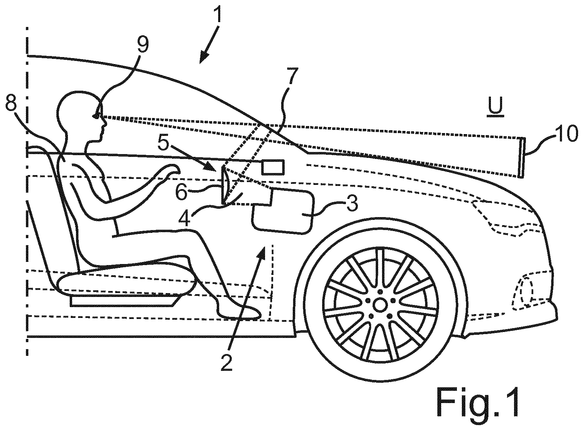

Fig. 1 zeigt eine ausschnittsweise Darstellung eines Kraftfahrzeugs 1 gemäß einer Ausführungsform der vorliegenden Erfindung. Das Kraftfahrzeug 1 ist in dem vorliegenden Ausführungsbeispiel als Personenkraftwagen ausgebildet. Das Kraftfahrzeug 1 umfasst allgemein eine Anzeigevorrichtung 2 zur Projektion eines virtuellen Bilds 10 auf eine vorrichtungsexterne Projektionsfläche. Die Anzeigevorrichtung 2 ist in dem vorliegenden Ausführungsbeispiel als Kopf-Oben-Anzeigevorrichtung bzw. Head-Up-Display ausgebildet. Die Anzeigevorrichtung 2 kann insbesondere an einer Kombihutze des Kraftfahrzeuges 1 angeordnet sein, welche wiederum an einem Armaturenbrett angeordnet sein kann.

Die Anzeigevorrichtung 2 umfasst eine Projektionseinrichtung 3. Mittels der Projektionseinrichtung 3 kann insbesondere Licht 4 abgestrahlt werden. Insbesondere kann mit der Projektionseinrichtung 3 ein Bild bereitgestellt werden. Die Projektionseinrichtung 3 kann beispielsweise einen entsprechenden Bildschirm aufweisen, mit dem Licht 4 von zunächst einer Lichtquelle der Projektionseinrichtung 3 zur Erzeugung des virtuellen Bilds 10 verarbeitet wird und dann ein Bild bereitgestellt werden kann. Darüber hinaus umfasst die Anzeigevorrichtung 2 eine Optikeinrichtung 5. Die Optikeinrichtung 5 umfasst vorliegend einen Spiegel 6. Das von der Projektionseinrichtung 3 abgestrahlte Licht 4 in Form des virtuellen Bilds 10 trifft zunächst auf den Spiegel 6 und anschließend auf ein Anzeigeelement bzw. auf eine vorrichtungsexterne Projektionsfläche, welches bzw. welche insbesondere eine Windschutzscheibe 7 des Kraftfahrzeugs 1 darstellt. Die Projektionseinrichtung 3 und die Optikeinrichtung 5 sind vorliegend innerhalb eines Armaturenbretts des Kraftfahrzeugs 1 angeordnet.

Die Windschutzscheibe 7 weist eine Spiegelfläche auf und ist semi-transparent ausgebildet. Das Licht 4, das von der Projektionseinrichtung 3 abgestrahlt wird, wird mittels der Optikeinrichtung 5 auf die Windschutzscheibe 7 projiziert. Ferner wird das Licht 4, das auf die Windschutzscheibe 7 projiziert wird, zu den Augen 9 eines Beobachters, insbesondere eines Fahrers 8, des Kraftfahrzeugs 1 reflektiert. Somit überlagert sich diese Anzeige mit dem Licht, das von einem Umgebungsbereich U des Kraftfahrzeugs 1 zu den Augen 9 des Betrachters gelangt, mit dem Licht 4, das auf die Windschutzscheibe 7 projiziert wird. Für den Betrachter, der insbesondere den Fahrer 8 des Kraftfahrzeugs 1 ist, ergibt sich somit eine virtuelle Anzeige bzw. ein virtuelles Bild 10.

Das virtuelle Bild 10 kann insbesondere so auf die Windschutzscheibe 7 projiziert werden, dass es in einem unteren Sichtbereich des Fahrers 8 dargestellt wird. Vorzugsweise befindet sich die Position in einem unteren Sichtbereich des Fahrers 8 dort, wo keine Spiegelung von anderen Kraftfahrzeugbauteilen, beispielsweise eine Spiegelung des Armaturenbretts, für den Fahrer 8 auftreten. Vorzugsweise befindet sich das virtuelle Bild 10 weiterhin in einem Sichtbereich, so dass alle Hindernisse, insbesondere einer Straße, von dem Fahrer 8 noch erkennbar.

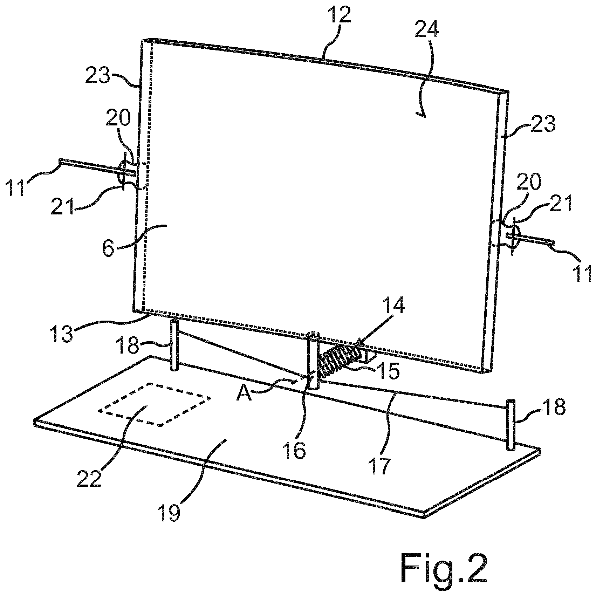

Fig. 2 zeigt ausschnittsweise und schematisch die Anzeigevorrichtung 2 in einer Perspektivansicht. Der Spiegel 6 der Projektionseinrichtung 3 ist dabei insbesondere um eine Drehachse 11 schwenkbar gelagert. Die Drehachse 11 des Spiegels 6 verläuft beabstandet zu einem oberen Rand 12 und einem unteren Rand 13, insbesondere parallel zu dem oberen Rand 12 und/oder dem unteren Rand 13. An dem unteren Rand 13 ist vorteilhafterweise eine Koppelstelle 14 angeordnet, die insbesondere außerhalb einer Reflexionsfläche 24 des Spiegels 6 ausgebildet ist. Über die Koppelstelle 14 ist der Spiegel 6 mit einem Koppelelement 15 verbunden. Das Koppelelement 15 ist beispielsweise als Federelement ausgebildet, welches somit in Richtung seiner Längsachse A in sich selbst längenveränderlich ist. Es sind aber auch weitere Ausführungsformen möglich, insbesondere ist eine weitere Ausführungsform als ein zweiter Formgedächtnisdraht möglich, der auch entsprechend in sich selbst längenveränderlich ist. Das Koppelelement 15, das an einem ersten Ende mit der Koppelstelle 14 verbunden ist, ist an einer zweiten Stelle mit einem Verbindungselement 16 verbunden. Das Verbindungselement 16 kann hier insbesondere zylinderförmig ausgebildet sein, wodurch eine größere Verbindungsfläche realisiert werden kann, sodass ein erster Formgedächtnisdraht 17 einen Kontakt mit dem Verbindungselement 16 herstellen kann, dieser aber dennoch Bewegungsfreiheiten hat.

Der erste Formgedächtnisdraht 17 ist in der Ausgestaltungsform derart positioniert, dass dieser in verkürzter Position zumindest größtenteils parallel zu der Drehachse 11 des Spiegels 6 verläuft. Der erste Formgedächtnisdraht 17 ist an zwei stiftartigeHalteelemente 18 angeordnet, die zum einen zum Halten und Vorspannen des ersten Formgedächtnisdrahtes 17 dienen, aber zum anderen auch mit einer Platine 19 verbunden sind und elektrisch leitend sind. An den weiteren Rändern 23 des Spiegels 6 sind jeweilige Arretiervorrichtungen 20 angeordnet, die zum Arretieren des Spiegels 6 in einer Umlenkposition ausgebildet sind. Der Spiegel 6 selbst wird mittels einer Halterung 21 an einem in dieser Figur nicht gezeigten Gehäuse der Anzeigevorrichtung 2 gehalten.

Die Halterung 21 ist in diesem Ausführungsbeispiel an der Drehachse 11 des Spiegels 6 angeordnet.

Eine Steuereinrichtung 22 auf der Platine 19 dient zum Ansteuern, insbesondere zur Bestromung des ersten Formgedächtnisdrahts 17. Die Halteelemente 18 können dabei elektrisch durch die Steuereinrichtung 22 angesteuert werden, wodurch der erste Formgedächtnisdraht 17 eine Längenänderung vollziehen kann. Findet beispielsweise aus der hier dargestellten Position des ersten Formgedächtnisdrahts 17 eine Verkürzung des ersten Formgedächtnisdrahts 17 statt, so wird eine Kraft auf das Verbindungselement 16 übertragen welches wiederum die Kraft an das Koppelelement 15 weitergibt. Das Koppelelement 15 ist hierbei als ein Federelement ausgebildet, und kann die Kraft dämpfend mittels der Koppelstelle 14 an den unteren Rand 13 des Spiegels 6 übertragen. Ein zwischen der Drehachse 11 und dem unteren Rand 13 entstandener Hebelarm führt von einer linearen Kraft, die von dem Koppelelement 15 übertragen wird, zu einer Drehbewegung um die Drehachse 11 des Spiegels 6.

Eine optionale Sensoreinrichtung im Kraftfahrzeug 1 kann zum Beispiel eine Augenhöhe oder einen Augpunkt eines Beobachters, insbesondere des Fahrers 8 ermitteln. Beispielhaft kann die Sensoreinrichtung als Kamera, die an einem Dachhimmel oder an einem der Windschutzscheibe 7 angeordneten Innenspiegel des Kraftfahrzeuges 1 angeordnet sein kann, ausgestaltet und dazu eingerichtet sein, eine räumliche Lage eines Auges 9 des Fahrers 8 zu erfassen. Über eine drahtlose oder drahtgebundene Datenkommunikationseinrichtung kann das Sensorsignal an die Steuereinrichtung 22 übertragen werden. Die Steuereinrichtung 22 kann dann in Abhängigkeit des Sensorsignals, also in Abhängigkeit der Lage des Auges 9, den ersten Formgedächtnisdraht 17 ansteuern und somit den Spiegel 6 in eine bevorzugte Position schwenken. Zusätzlich oder alternativ kann die Steuereinrichtung 22 ein Steuersignal von einer Bedieneinrichtung empfangen, die einen gewünschten Höhenversatz des Sichtbereichs um die Augposition des Fahrers 8 beschreibt. Hierzu kann der Fahrer 8 beispielsweise mit Hilfe der Bedieneinrichtung eines Kombiinstrumentes oder eines Infotainmentsystems eine Verstellung des Sichtbereiches eingeben.

Das Schwenken des Spiegels 6 kann um die Drehachse 11 erfolgen, die vorzugsweise bei einer eingebauten Anzeigevorrichtung 2 in einer Kraftfahrzeugquerrichtung verlaufen kann. Im diesem Ausführungsbeispiel verläuft die Drehachse 11 senkrecht zu einer Bildebene. Durch die schwenkbare Lagerung des Spiegels 6 innerhalb des nicht gezeigten Gehäuses wird eine Spiegelebene für das virtuelle Bild 10 bei Änderung der Spiegelposition linear verschoben, ohne dass sich das virtuelle Bild 10 in seiner Lage auf der Projektionsfläche, insbesondere der Windschutzscheibe 7, signifikant ändert. Durch die lineare Verschiebung der Spiegelungsebene kann eine Verlagerung der Eyebox erreicht werden. Dadurch kann das virtuelle Bild 10 bezogen auf die Straße auf gleicher Höhe gehalten werden.

Durch diese Schwenkbewegung des Spiegels 6 (zwischen +/-1,8°) kann das virtuelle Bild 10 um +/-2°auf der Windschutzscheibe 7 verschoben werden, wodurch eine Anpassung der Eyebox an den Beobachter, insbesondere den Fahrer 8, realisiert werden kann.

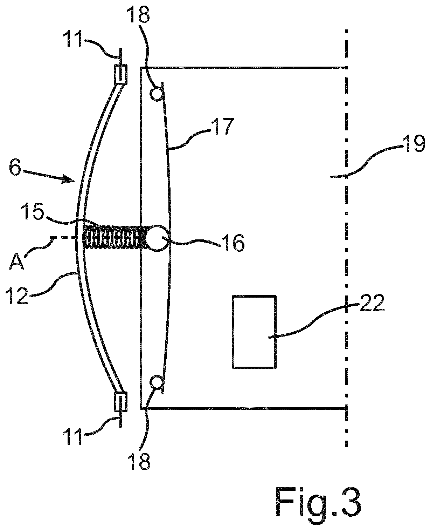

Fig. 3 zeigt eine ausschnittsweise und perspektivische vereinfachte Ansicht der bereits in Fig. 2 dargestellten Ausführungsform der Anzeigevorrichtung 2. Der Spiegel 6 befindet sich dabei in einer Umlenkposition, welche mittels einer Längenänderung des ersten Formgedächtnisdrahtes 17 realisiert werden kann. Der erste Formgedächtnisdraht 17 ist dabei mit einem Verbindungselement 16 an einem Koppelelement 15 angeordnet, wodurch eine Längenänderung des ersten Formgedächtnisdrahtes 17 zu einer linearen Bewegung des Koppelelementes 15 führt. Das Koppelelement 15 ist hierbei als Federelement ausgebildet, wodurch auf das Koppelelement 15 wirkende Kräfte dämpfend an den Spiegel 6, welcher über die Koppelstelle 14 mit dem Koppelelement 15 verbunden ist, dämpfend übertragen werden können. Eine lineare Kraftübertragung des Koppelelements 15 wirkt dabei wie ein Hebelarm, und bewirkt dabei eine Schwenkung des Spiegels 6. Durch die schwenkbare Lagerung des Spiegels 6 innerhalb eines nicht dargestellten Gehäuses wird eine Spiegelebene für das virtuelle Bild 10 bei Änderung der Position des Spiegels 6 linear verschoben, ohne dass sich das virtuelle Bild 10 in seiner Lage auf der Windschutzscheibe 7 signifikant, jedoch entsprechend der gewünschten Einstellung, ändert

## Patentansprüche

1. Anzeigevorrichtung (2) für ein Kraftfahrzeug (1) mit einem Gehäuse, welches eine in dem Gehäuse angeordnete Projektionseinrichtung (3) zum Erzeugen eines virtuellen Bildes (10) auf eine außerhalb des Gehäuses liegende und von einem Beobachter betrachtbare Projektionsfläche aufweist, die zumindest einen um eine Drehachse (11) schwenkbar gelagerten Spiegel (6) aufweist, der in einer Umlenkposition zum Umlenken eines von einer Lichtquelle der Projektionseinrichtung (3) ausgegebenen Lichtes (4) ausgebildet ist, und mit einer Justiervorrichtung zum Justieren der Umlenkposition des Spiegels (6) durch Schwenken um die Drehachse (11),
wobei die Justiervorrichtung zumindest einen ersten Formgedächtnisdraht (17) aufweist der mit dem Spiegel (6) gekoppelt ist, so dass der Spiegel (6) durch eine Längenveränderung des ersten Formgedächtnisdrahtes (17) um die Drehachse (11) schwenkbar ist und, dass
die Justiervorrichtung ein separates Koppelelement (15) aufweist, welches mit dem ersten Formgedächtnisdraht (17) und dem Spiegel (6) gekoppelt ist, so dass mittels der Längenveränderung des ersten Formgedächtnisdrahtes (17) eine Bewegung, insbesondere eine lineare Bewegung, des Koppelelementes (15) bewirkbar ist und dadurch ein Verschwenken des Spiegels (6) um die Drehachse (11) zur Verstellung der Umlenkposition auftritt und der Formgedächtnisdraht (17) derart positioniert ist, dass dieser in verkürzter Position zumindest größtenteils parallel zu der Drehachse (11) des Spiegels (6) verläuft.

2. Anzeigevorrichtung (2) nach Anspruch 1,
**dadurch gekennzeichnet, dass**
das Koppelelement (15) in Richtung seiner Längsachse (A) betrachtet in sich selbst längenveränderlich ausgebildet ist.

3. Anzeigevorrichtung (2) nach Anspruch 2,
**dadurch gekennzeichnet, dass**
das Koppelelement (15) als ein Federelement ausgebildet ist.

4. Anzeigevorrichtung (2) nach Anspruch 2,
**dadurch gekennzeichnet, dass**
das Koppelelement (15) als ein zweiter Formgedächtnisdraht ausgebildet ist.

5. Anzeigevorrichtung (2) nach Anspruch 1 bis 4,
**dadurch gekennzeichnet, dass**
das Koppelelement (15) mit dem ersten Formgedächtnisdraht (17) durch ein separates Verbindungselement (16) verbunden ist.

6. Anzeigevorrichtung (2) nach Anspruch 1 bis 5,
**dadurch gekennzeichnet, dass**
das Koppelelement (15) außerhalb einer Reflexionsfläche (24) des Spiegels (6) mit dem Spiegel (6) gekoppelt ist.

7. Anzeigevorrichtung (2) nach Anspruch 1 bis 6
**dadurch gekennzeichnet, dass**
eine Koppelstelle (14) zwischen dem Koppelelement (15) und dem Spiegel (6) nicht auf der Drehachse (11) iegend ausgebildet ist.

8. Anzeigevorrichtung (2) nach einem vorhergehenden Anspruch,
**dadurch gekennzeichnet, dass**
die Justiervorrichtung Halteelemente (18) aufweist an denen der erste Formgedächtnisdraht (17) befestigt ist, wobei die Halteelemente (18) an einer Platine (19) angeordnet sind.

9. Anzeigevorrichtung (2) nach einem vorhergehenden Anspruch,
**dadurch gekennzeichnet, dass**
die Justiervorrichtung eine Arretiervorrichtung (20) aufweist, mit welcher der Spiegel (6) in seiner justierten Umlenkposition arretierbar ist.

10. Anzeigevorrichtung (2) nach Anspruch 9,
**dadurch gekennzeichnet, dass**
die Arretiervorrichtung (20) eine an der Drehachse (11) angreifende Kupplung umfasst, durch welche der Spiegel (6) in einer eingestellten Umlenkposition arretierbar ist.

11. Anzeigevorrichtung (2) nach einem vorhergehenden Anspruch,
**dadurch gekennzeichnet, dass**
die Justiervorrichtung derart ausgebildet ist, dass der Spiegel (6) in seiner Umlenkposition um kleiner ± 1,8° um eine Grundstellung veränderbar ist.

12. Fahrerassistenzsystem, welches eine Anzeigevorrichtung (2) gemäß den Ansprüchen 1 bis 11 aufweist.

13. Kraftfahrzeug (1), welches ein Fahrerassistenzsystem gemäß Patentanspruch 12 aufweist.

14. Verfahren zum Justieren eines Spiegels (6) einer Anzeigevorrichtung (2) eines Kraftfahrzeuges (1), bei welchem die Anzeigevorrichtung (2) mit einem Gehäuse, welches eine in dem Gehäuse angeordnete Projektionseinrichtung (3) zum Erzeugen eines virtuellen Bildes (10) auf eine außerhalb des Gehäuses liegende und von einem Beobachter betrachtbare Projektionsfläche aufweist, und mit zumindest einem um eine Drehachse (11) schwenkbar gelagerten Spiegel (6), der in einer Umlenkposition zum Umlenken eines von einer Lichtquelle der Projektionseinrichtung (3) ausgegebenen Lichtes (4) ausgebildet ist, und mit einer Justiervorrichtung zum Justieren der Umlenkposition des Spiegels (6) durch Schwenken um die Drehachse (11) ausgebildet wird,
**dadurch gekennzeichnet, dass**
der Spiegel (6) mit einem ersten Formgedächtnisdraht (17) der Justiervorrichtung gekoppelt wird, wobei Formgedächtnisdraht (17) derart positioniert ist, dass dieser in verkürzter Position zumindest größtenteils parallel zu der Drehachse (11) des Spiegels (6) verläuft, und durch eine Längenänderung des ersten Formgedächtnisdrahts (17) eine Umlenkposition des Spiegels (6) durch Schwenken des Spiegels (6) um die Drehachse (11) eingestellt wird, wobei die Justiervorrichtung ein separates Koppelelement (15) aufweist, welches mit dem ersten Formgedächtnisdraht (17) und dem Spiegel (6) gekoppelt ist, so dass mittels der Längenveränderung des ersten Formgedächtnisdrahtes (17), insbesondere linear, das Koppelelement (15) bewegt wird ist und dadurch der Spiegel (6) um die Drehachse (11) zur Verstellung der Umlenkposition verschwenkt wird.

## Claims

1. Display device (2) for a motor vehicle (1), having a housing which has a projection device (3) arranged in the housing for generating a virtual image (10) on a projection surface located outside the housing and observable by an observer, which projection device has at least one mirror (6) mounted pivotably about an axis of rotation (11) and designed, in a deflection position, to deflect light (4) output by a light source of the projection device (3), and having an adjustment device for adjusting the deflection position of the mirror (6) by pivoting about the axis of rotation (11),
wherein the adjustment device has at least one first shape-memory wire (17), which is coupled to the mirror (6), such that the mirror (6) is pivotable about the axis of rotation (11) by means of a change in length of the first shape-memory wire (17), and
the adjustment device has a separate coupling element (15), which is coupled to the first shape-memory wire (17) and to the mirror (6), such that a movement, in particular a linear movement, of the coupling element (15) can be effected by means of the change in length of the first shape-memory wire (17), and thus a pivoting of the mirror (6) about the axis of rotation (11) occurs in order to shift the deflection position, and the shape-memory wire (17) is positioned in such a way that, in a shortened position, it extends at least largely in parallel to the axis of rotation (11) of the mirror (6).

2. Display device (2) according to Claim 1,
**characterized in that**
the coupling element (15), viewed in the direction of its longitudinal axis (A), is designed itself to be variable in length.

3. Display device (2) according to Claim 2,
**characterized in that**
the coupling element (15) is designed as a spring element.

4. Display device (2) according to Claim 2,
**characterized in that**
the coupling element (15) is designed as a second shape-memory wire.

5. Display device (2) according to Claims 1 to 4,
**characterized in that**
the coupling element (15) is connected to the first shape-memory wire (17) by a separate connecting element (16) .

6. Display device (2) according to Claims 1 to 5,
**characterized in that**
the coupling element (15) is coupled to the mirror (6) outside a reflection area (24) of the mirror (6).

7. Display device (2) according to Claims 1 to 6,
**characterized in that**
a coupling point (14) between the coupling element (15) and the mirror (6) is formed not lying on the axis of rotation (11).

8. Display device (2) according to a preceding claim,
**characterized in that**
the adjustment device has holding elements (18) on which the first shape-memory wire (17) is fastened, wherein the holding elements (18) are arranged on a circuit board (19) .

9. Display device (2) according to a preceding claim,
**characterized in that**
the adjustment device has a locking device (20), by which the mirror (6) is lockable in its adjusted deflection position.

10. Display device (2) according to Claim 9,
**characterized in that**
the locking device (20) comprises a clutch which engages on the axis of rotation (11) and by which the mirror (6) is lockable in a set deflection position.

11. Display device (2) according to a preceding claim,
**characterized in that**
the adjustment device is designed in such a way that the mirror (6), in terms of its deflection position, is changeable by less than ± 1.8° around a base position.

12. Driver assistance system, which has a display device (2) according to Claims 1 to 11.

13. Motor vehicle (1), which has a driver assistance system according to Claim 12.

14. Method for adjusting a mirror (6) of a display device (2) of a motor vehicle (1), in which method the display device (2) is designed having a housing which has a projection device (3) arranged in the housing for generating a virtual image (10) on a projection surface located outside the housing and observable by an observer, and having at least one mirror (6) mounted pivotably about an axis of rotation (11) and designed, in a deflection position, to deflect light (4) output by a light source of the projection device (3), and having an adjustment device for adjusting the deflection position of the mirror (6) by pivoting about the axis of rotation (11),
**characterized in that**
the mirror (6) is coupled to a first shape-memory wire (17) of the adjustment device, wherein the shape-memory wire (17) is positioned in such a way that, in a shortened position, it extends at least largely in parallel to the axis of rotation (11) of the mirror (6), and a deflection position of the mirror (6) is set by pivoting of the mirror (6) about the axis of rotation (11) by means of a change in length of the first shape-memory wire (17), wherein the adjustment device has a separate coupling element (15), which is coupled to the first shape-memory wire (17) and to the mirror (6), such that, by means of the change in length of the first shape-memory wire (17), the coupling element (15) is moved, in particular linearly, and the mirror (6) is thus pivoted about the axis of rotation (11) in order to shift the deflection position.

## Revendications

1. Dispositif d'affichage (2) pour un véhicule automobile (1) avec un boîtier, qui présente un appareil de projection (3) agencé dans le boîtier pour générer une image virtuelle (10) sur une surface de projection située à l'extérieur du boîtier et pouvant être observée par un observateur, qui présente au moins un miroir (6) monté de manière pivotante autour d'un axe de rotation (11), lequel est réalisé dans une position de déviation pour dévier une lumière (4) émise par une source lumineuse de l'appareil de projection (3), et avec un dispositif d'ajustement pour ajuster la position de déviation du miroir (6) par pivotement autour de l'axe de rotation (11),
le dispositif d'ajustement présentant au moins un premier fil à mémoire de forme (17) qui est couplé au miroir (6), de telle sorte que le miroir (6) peut être pivoté autour de l'axe de rotation (11) par une modification de longueur du premier fil à mémoire de forme (17), et
le dispositif d'ajustement présentant un élément de couplage (15) séparé, qui est couplé au premier fil à mémoire de forme (17) et au miroir (6), de telle sorte qu'au moyen de la modification de longueur du premier fil à mémoire de forme (17), un mouvement, notamment un mouvement linéaire, de l'élément de couplage (15) peut être provoqué et qu'il se produit ainsi un pivotement du miroir (6) autour de l'axe de rotation (11) pour le réglage de la position de déviation, et le fil à mémoire de forme (17) est positionné de telle sorte que celui-ci s'étend, en position raccourcie, au moins en grande partie parallèlement à l'axe de rotation (11) du miroir (6).

2. Dispositif d'affichage (2) selon la revendication 1,
**caractérisé en ce que**
l'élément de couplage (15), vu dans la direction de son axe longitudinal (A), est réalisé de manière à être modifiable en longueur en soi.

3. Dispositif d'affichage (2) selon la revendication 2,
**caractérisé en ce que**
l'élément de couplage (15) est réalisé sous la forme d'un élément à ressort.

4. Dispositif d'affichage (2) selon la revendication 2,
**caractérisé en ce que**
l'élément de couplage (15) est réalisé sous la forme d'un deuxième fil à mémoire de forme.

5. Dispositif d'affichage (2) selon les revendications 1 à 4,
**caractérisé en ce que**
l'élément de couplage (15) est relié au premier fil à mémoire de forme (17) par un élément de liaison séparé (16) .

6. Dispositif d'affichage (2) selon les revendications 1 à 5,
**caractérisé en ce que**
l'élément de couplage (15) est couplé au miroir (6) à l'extérieur d'une surface de réflexion (24) du miroir (6).

7. Dispositif d'affichage (2) selon les revendications 1 à 6
**caractérisé en ce que**
un point de couplage (14) entre l'élément de couplage (15) et le miroir (6) n'est pas réalisé sur l'axe de rotation (11).

8. Dispositif d'affichage (2) selon une revendication précédente,
**caractérisé en ce que**
le dispositif d'ajustement présente des éléments de maintien (18) auxquels le premier fil à mémoire de forme (17) est fixé, les éléments de maintien (18) étant agencés sur une platine (19).

9. Dispositif d'affichage (2) selon une revendication précédente,
**caractérisé en ce que**
le dispositif d'ajustement présente un dispositif de blocage (20) avec lequel le miroir (6) peut être bloqué dans sa position de déviation ajustée.

10. Dispositif d'affichage (2) selon la revendication 9,
**caractérisé en ce que**
le dispositif de blocage (20) comprend un accouplement s'engageant sur l'axe de rotation (11), par lequel le miroir (6) peut être bloqué dans une position de déviation réglée.

11. Dispositif d'affichage (2) selon une revendication précédente,
**caractérisé en ce que**
le dispositif d'ajustement est réalisé de telle sorte que le miroir (6) peut être modifié dans sa position de déviation de moins de ± 1,8° autour d'une position de base.

12. Système d'assistance au conducteur, qui présente un dispositif d'affichage (2) selon les revendications 1 à 11.

13. Véhicule automobile (1), qui présente un système d'assistance au conducteur selon la revendication 12.

14. Procédé d'ajustement d'un miroir (6) d'un dispositif d'affichage (2) d'un véhicule automobile (1), le dispositif d'affichage (2) étant réalisé avec un boîtier qui présente un appareil de projection (3) agencé dans le boîtier pour générer une image virtuelle (10) sur une surface de projection située à l'extérieur du boîtier et pouvant être observée par un observateur, et avec au moins un miroir (6) monté de manière pivotante autour d'un axe de rotation (11), qui est réalisé dans une position de déviation pour dévier une lumière (4) émise par une source lumineuse de l'appareil de projection (3), et avec un dispositif d'ajustement pour ajuster la position de déviation du miroir (6) par pivotement autour de l'axe de rotation (11),
**caractérisé en ce que**
le miroir (6) est couplé à un premier fil à mémoire de forme (17) du dispositif d'ajustement, le fil à mémoire de forme (17) étant positionné de telle sorte qu'en position raccourcie, il s'étend au moins en grande partie parallèlement à l'axe de rotation (11) du miroir (6), et une position de déviation du miroir (6) est réglée par une modification de longueur du premier fil à mémoire de forme (17) par pivotement du miroir (6) autour de l'axe de rotation (11), le dispositif d'ajustement présentant un élément de couplage séparé (15) qui est couplé au premier fil à mémoire de forme (17) et au miroir (6), de telle sorte qu'au moyen de la modification de longueur du premier fil à mémoire de forme (17), l'élément de couplage (15) est déplacé, notamment linéairement, et le miroir (6) est ainsi pivoté autour de l'axe de rotation (11) pour le réglage de la position de déviation.
